# EUROPÄISCHE PATENTSCHRIFT

(11) **EP 0 759 380 B1**
(45) Veröffentlichungstag und Bekanntmachung des Hinweises auf die Patenterteilung: **17.10.2001**
(21) Anmeldenummer: 96112156.3
(22) Anmeldetag: 26.07.1996
(51) Int. Cl.: B60R 21/20

(54) **Baugruppe aus einem langgestreckten Gehäuse und einem darin aufgenommenen Gasgenerator**
Assembly comprising an elongated housing and a gas generator received therein
Ensemble comportant un boîtier allongé et un générateur de gaz à l'intérieur de celui-ci

(30) Priorität: 23.08.1995 DE 29513565 U
(43) Veröffentlichungstag der Anmeldung: 26.02.1997
(73) Patentinhaber: TRW Occupant Restraint Systems GmbH & Co. KG, 73551 Alfdorf (DE)
(72) Erfinder: Benz, Gerhard, 73457 Essingen (DE); Grupp, Thomas, 73642 Welzheim (DE)
(74) Vertreter: Degwert, Hartmut, Dipl.-Phys.

(56) Entgegenhaltungen:
- US-A- 4 941 678
- US-A- 5 069 480
- US-A- 5 356 175

## Beschreibung

Die Erfindung betrifft eine Baugruppe aus einem langgestreckten Gehäuse und einem darin aufgenommenen Gasgenerator für ein Gassack-Rückhaltesystem in Fahrzeugen gemäß dem Oberbegriff des Patentanspruchs 1. Eine solche Baugruppe ist aus der US 5 356 175 bekannt.

Die Befestigung eines Gasgenerators im Gehäuse eines Gassack-Rückhaltesystems für Fahrzeuge erfolgt üblicherweise über eine Flanschverbindung. Für eine solche Flanschverbindung werden einige Bauteile benötigt, die nach dem Einsetzen des Gasgenerators montiert werden müssen.

Durch die Erfindung wird eine Baugruppe aus einem langgestreckten Gehäuse und einem darin aufgenommenen Gasgenerator zur Verfügung gestellt, die sich durch besonders einfache Montage und Wegfall von üblichen Befestigungs- und Montageteilen auszeichnet. Gemäß der Erfindung ist der andere Deckel mit einer Spannschraube versehen, deren in das Gehäuse hineinragendes Ende gegen den Boden des Gasgenerators vorgespannt ist, so daß der Gasgenerator gegen die Öffnung des einen Deckels vorgespannt ist.

Infolge dieses Aufbaus wird der Gasgenerator lediglich in das Gehäuse eingesetzt, wobei einer der zwei Deckel bereits montiert sein kann, und dann wird der zweite Deckel eingesetzt, wodurch der Gasgenerator bereits axial festgelegt ist. Zum Ausgleich von Toleranzen ist der auf der Bodenseite des Gasgenerators befindliche Deckel mit einer Spannschraube versehen, deren in das Gehäuse hineinragendes Ende gegen den Boden des Gasgenerators verspannt ist.

Vorzugsweise wird der langgestreckte Hauptkörper des Gehäuses aus einem allgemein rinnenförmigen Strangpreßprofilteil hergestellt. Ohne zusätzliche Werkzeugskosten ist so eine Anpassung an unterschiedliche Längen des Gasgenerators möglich. Bei einer solchen Ausführungsform wird der Gasgenerator vorzugsweise durch ein seinen Außenumfang teilweise umgreifendes, am Gehäuse befestigtes Halteblech radial im Gehäuse festgelegt.

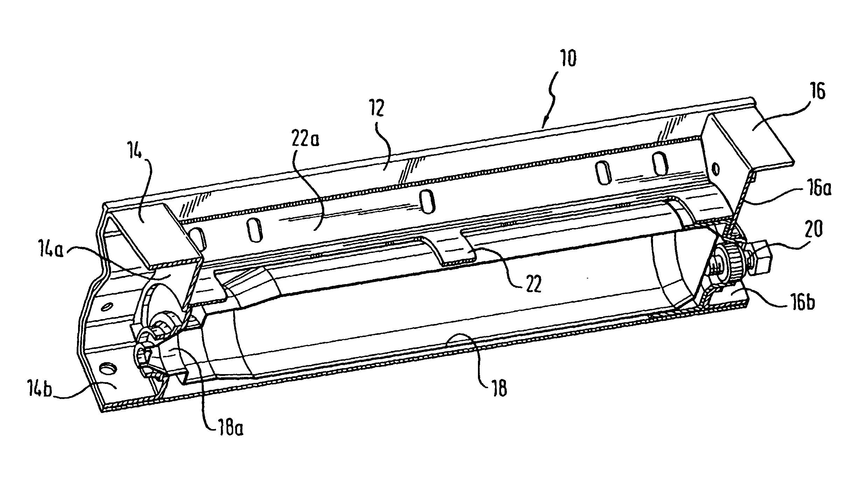

Weitere Vorteile und Merkmale der Erfindung ergeben sich aus der folgenden Beschreibung und aus der Zeichnung, deren einzige Figur eine vorteilhafte Ausführungsform der Baugruppe in Perspektive, aber axial geschnitten, darstellt.

Das allgemein mit 10 bezeichnete Gehäuse der Baugruppe besteht aus einem langgestreckten Hauptkörper 12, der aus einem rinnenförmigen Strangpreßprofilteil hergestellt ist, und aus zwei in die offenen Enden des Hauptkörpers 12 eingesetzten Deckeln 14, 16. Jeder dieser Deckel 14, 16 weist außer einer radialen Wand 14a bzw. 16a eine an der Innenseite des Hauptkörpers 12 anliegende Umfangswand 14b bzw. 16b auf.

Der Gasgenerator 18 hat die Form einer langgestreckten zylindrischen Flasche mit einem flachen Boden und einem verjüngten Halsstück. Das verjüngte Halsstück 18a des Gasgenerators 18 ragt durch eine Öffnung in einem durch eine Sicke abgesetzten Teil der radialen Wand 14a des Deckels 14.

Der Deckel 16 ist mit einer Spannschraube 20 versehen, deren inneres Ende in das Gehäuse hineinragt und gegen den Boden des Gasgenerators 18 verspannt ist. Mittels dieser Spannschraube 20 werden Maßtoleranzen des Gasgenerators oder des Gehäuses ausgeglichen.

Der Deckel 16 ist ferner im Bereich seiner radialen Wand 16a mit Prägungen versehen, durch die Führungs- und Zentrierflächen für den Gasgenerator 18 geschaffen sind.

Die offene Seite des rinnenförmigen Hauptkörpers 12 wird durch ein den Außenumfang des Gasgenerators 18 teilweise umgreifendes Halteblech 22, das entlang zwei Seitenstreifen 22a mit dem Hauptkörper 12 verbunden ist, gesichert, so daß der Gasgenerator 18 auch radial in dem Gehäuse 10 festgelegt ist.

Zur Montage wird zunächst der Deckel 16 in den Hauptkörper 12 des Gehäuses 10 eingesetzt und daran befestigt. Dann wird das Halteblech 22 aufgesetzt und am Hauptkörper 12 befestigt. Der Gasgenerator 18 kann nun in Längsrichtung des Gehäuses eingeschoben werden, wobei er durch die Führungs- und Zentrierflächen am Deckel 16 zentriert und radial ausgerichtet wird. Anschließend wird der Deckel 14 in das gegenüberliegende Ende des Hauptkörpers 12 eingesetzt und dort befestigt. Mittels der Spannschraube 20 wird nun lediglich noch der Gasgenerator 18 in Axialrichtung festgelegt und unter eine gewisse Vorspannung gesetzt, wodurch die Montage des Gasgenerators abgeschlossen ist.

## Patentansprüche

1. Baugruppe aus einem langgestreckten Gehäuse (10) und einem darin aufgenommenen Gasgenerator (18) für ein Gassack-Rückhaltesystem in Fahrzeugen, bei der der Gasgenerator (18) zwischen zwei die offenen Enden des Gehäuses (10) verschließenden Deckeln (14, 16) axial gehalten ist und einer der Deckel (14) eine Öffnung aufweist, durch die ein verjüngtes Ende (18a) des Gasgenerators ragt, **dadurch gekennzeichnet, daß** der andere Deckel (16) mit einer Spannschraube (20) versehen ist, deren in das Gehäuse hineinragende Ende gegen den Boden des Gasgenerators (18) verspannt ist, so daß der Gasgenerator (18) gegen die Öffnung des einen Deckels vorgespannt ist.

2. Baugruppe nach Anspruch 1, **dadurch gekennzeichnet, daß** der Gasgenerator (18) durch ein seinen Außenumfang teilweise umgreifendes, am Gehäuse befestigtes Halteblech (22) radial im Gehäuse festgelegt ist.

3. Baugruppe nach Anspruch 1 oder 2, **dadurch gekennzeichnet, daß** der langgestreckte Hauptkörper (12) des Gehäuses aus einem allgemein rinnenförmigen Strangpreßprofilteil hergestellt ist.

4. Baugruppe nach Anspruch 3, **dadurch gekennzeichnet, daß** die Deckel (14, 16) je eine an der Innenseite des Gehäuses (10) anliegende Umfangswand (14b, 16b) aufweisen.

5. Baugruppe nach einem der vorstehenden Ansprüche, **dadurch gekennzeichnet, daß** die Deckel (14, 16) mit Führungs- und Zentrierflächen für den Gasgenerator (18) ausgebildet sind.

## Claims

1. An assembly comprising an elongate housing (10) and a gas generator (18) accommodated therein, for a gas bag restraint system in a vehicle, in which the gas generator (18) is axially held between two covers (14, 16) closing the open ends of the housing (10) and one (14) of the covers (14, 16) comprises an opening through which a narrowed end (18a) of the gas generator protrudes, **characterized in that** the other cover (16) is fitted with a clamping screw (20) whose end projecting into the housing is clamped against the base of the gas generator (18), so that the gas generator (18) is pretensioned against the opening in the one cover.

2. The assembly according to claim 1, **characterized in that** the gas generator (18) is secured radially in the housing by a holding plate (22) partly encompassing the outer periphery of the gas generator and fixed to the housing.

3. The assembly according to claim 1 or 2, **characterized in that** the elongate main body (12) of the housing is manufactured from a generally trough-shaped extruded profile part.

4. The assembly according to claim 3, **characterized in that** each of the covers (14, 16) comprises a circumferential wall (14b, 16b) in contact with the inside of the housing (10).

5. The assembly according to any of the preceding claims, **characterized in that** the covers (14, 16) are furnished with guiding and centering surfaces for the gas generator (18).

## Revendications

1. Ensemble constitué par un boîtier (10) de forme allongée et par un générateur de gaz (18) logé dans celui-ci, pour un système de retenue à coussin à gaz pour véhicules, dans lequel le générateur de gaz (18) est maintenu axialement entre deux couvercles (14, 16) fermant les extrémités ouvertes du boîtier (10) et l'un des couvercles (14) présente une ouverture à travers laquelle passe une extrémité (18a), qui va en se rétrécissant, du générateur de gaz, **caractérisé en ce que** l'autre couvercle (16) est pourvu d'une vis de serrage (20) dont l'extrémité, qui pénètre dans le boîtier, est serrée contre le fond du générateur de gaz (18) de sorte que le générateur de gaz (18) est précontraint contre l'ouverture de l'un des couvercles.

2. Ensemble selon la revendication 1, **caractérisé en ce que** le générateur de gaz (18) est fixé radialement dans le boîtier par une tôle de maintien (22) qui entoure en partie son pourtour extérieur, et qui est fixée sur le boîtier.

3. Ensemble selon la revendication 1 ou 2, **caractérisé en ce que** le corps principal (12) de forme allongée du boîtier est fabriqué à partir d'une pièce profilée extrudée ayant de façon générale la forme d'une gouttière.

4. Ensemble selon la revendication 3 **caractérisé en ce que** les couvercles (14, 16) présentent chacun une paroi périphérique (14b, 16b) reposant sur la face intérieure du boîtier (10).

5. Ensemble selon l'une quelconque des revendications précédentes, **caractérisé en ce que** les couvercles (14, 16) sont réalisés avec des surfaces de guidage et de centrage pour le générateur de gaz (18).
